# EUROPÄISCHE PATENTSCHRIFT

(11) **EP 0 579 111 B1**
(45) Veröffentlichungstag und Bekanntmachung des Hinweises auf die Patenterteilung: **25.10.1995**
(21) Anmeldenummer: 93110911.0
(22) Anmeldetag: 08.07.1993
(51) Int. Cl.: F16K 31/60, F16K 11/074

(54) **Eingriffmischventil**
Single-lever mixing valve
Mitigeur à commande unique

(30) Priorität: 14.07.1992 DE 4223093
(43) Veröffentlichungstag der Anmeldung: 19.01.1994
(73) Patentinhaber: FRIEDRICH GROHE AKTIENGESELLSCHAFT, D-58675 Hemer (DE)
(72) Erfinder: Gnauert, Werner, D-58640 Iserlohn (DE)

(56) Entgegenhaltungen:
- EP-A- 0 092 863
- DE-A- 3 426 236
- DE-A- 4 113 878
- DE-U- 9 017 658

## Beschreibung

Die Erfindung betrifft ein Eingriffmischventil mit einem als Kopfteil ausgebildeten Betätigungsgriff, wobei das Kopfteil von einem aus dem Ventilgehäuse vorstehenden Stellhebel aufgenommen und an ihm befestigt ist.

Ein derartiges Eingriffmischventil ist aus der DE 34 26 236 C2 bekannt. Bei diesem Mischventil wird der Betätigungshebel mit seinem Kopfteil auf dem Stellhebel mit einer Befestigungsschraube sicher verbunden. Hierbei ist im Kopfteil eine im Sichtbereich des Benutzers liegende Öffnung für die Befestigungsschraube erforderlich. Ferner ist es bekannt, diese Öffnung mit einer zusätzlichen Abdeckscheibe oder Kappe zu verschließen. Eine derartige Abdeckscheibe verursacht jedoch einen zusätzlichen Aufwand und kann auch, z.B. aus geschmacklichen Gründen, unerwünscht sein.

Der Erfindung liegt die Aufgabe zugrunde, das im Oberbegriff des Anspruchs 1 angegebene Eingriffmischventil zu verbessern und insbesondere so auszubilden, daß im sichtbaren Bereich das Kopfteil ohne Befestigungsöffnung nung ausgebildet werden kann, wobei andererseits die sichere Verbindung mit dem Stellhebel gewährleistet bleiben soll.

Diese Aufgabe wird erfindungsgemäß dadurch gelöst, daß an dem Stellhebel ein Flanschelement befestigt ist, über das ein als Haube ausgebildeter Teil des Betätigungsgriffs aufgesteckt ist, wobei an dem Flanschelement ein Keilbereich vorgesehen ist, auf den der Betätigungsgriff mit einer entsprechend ausgebildeten keilförmigen Aufnahme an der inneren Mantelfläche der Haube durch Radialverschiebung zur Herstellung einer form- und kraftschlüssigen Verbindung gelangt.
Weitere Ausgestaltungen der Erfindung sind in den Ansprüchen 2 bis 7 angegeben.

Aus dem deutschen Gebrauchsmuster Nr. 90 17 658 war ferner ein auf einen Vierkantstift aufsteckbarer Bedienungshebel für eine sanitäre Mischbatterie bekannt, bei dem eine aus Kunststoff hergestellte Scheibe mit Schnappzungen für die Befestigung auf dem Stellhebel vorgesehen ist, die mit einem ebenfalls aus Kunststoff hergestellten Oberteil des Hebels verschweißt oder verklebt ist. Mit den Schnappzungen dürfte jedoch eine sichere Befestigung auf dem Stellhebel kaum herstellbar sein.
Demgegenüber wird mit der erfindungsgemäßen Ausbildung eine lösbare, aber sichere Befestigung auf dem Stellhebel vorgeschlagen, die durch die radial wirkende Keilverbindung eine form- und kraftschlüssige Verbindung zwischen Flanschelement und Stellhebel herstellt. Das Flanschelement und das Kopfteil des Stellhebels können aus einem beliebigen Material, vorzugsweise Metall oder Kunststoff, hergestellt werden. Durch die Keilverbindung werden das Flanschelement und das Kopfteil des Betätigungsgriffs spielfrei miteinander verbunden.
In weiterer Ausgestaltung kann die Verkeilung von Kopfteil und Flanschelement zweckmäßig von einem in radialer Richtung wirkenden Federelement zwischen Kopfteil und Flanschelement oder durch einen radial im Kopfteil angeordneten Gewindestift bewerkstelligt werden.

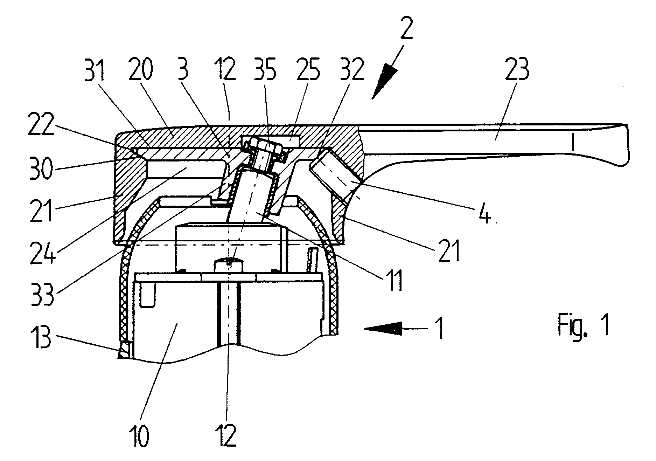

Ein Ausführungsbeispiel der Erfindung ist in der Zeichnung dargestellt und wird im folgenden näher erläutert. Es zeigt
- Figur 1: einen Teil eines Eingriffmischventils im Längsschnitt in vergrößerter Darstellung;
- Figur 2: den in Figur 1 gezeigten Betätigungsgriff mit Flanschelement in Druntersicht;
- Figur 3: den in Figur 2 gezeigten Betätigungsgriff im Seitenschnitt.

Das in der Zeichnung angegebene Eingriffmischventil 1 ist nur zum Teil dargestellt. In einem Armaturenkörper 13 ist hierbei in bekannter Weise ein als Einsatz ausgebildetes Mischventil bzw. eine Mischventilkartusche 10 befestigt. An der vorstehenden Stirnseite der Mischventilkartusche 10 ist ein Stellhebel 11 herausgeführt, an dem über ein Flanschelement 3 ein Betätigungsgriff 2 befestigbar ist. Mit einem Verschwenken eines Griffs 23 des Betätigungsgriffs 2 um eine Mittelachse 12 kann das Mischungsverhältnis von Kalt- und Warmwasser bzw. die Temperatur des ausströmenden Mischwassers eingestellt werden. Durch eine Auf-und Abbewegung des Griffs 23 kann dagegen die Ausflußmenge eingestellt werden.

Das Flanschelement 3 ist mit einem zur Mittelachse 12 geneigten Ansatz 33 mit quadratischem Querschnitt auf den Stellhebel 11 aufsteckbar und mit einer axial wirkenden Schraubverbindung 35, wie sie aus der DE 3426236 C2 bekannt war, in der Stecklage gesichert. Das Flanschelement 3 hat einen kreisflächenförmigen Flansch mit einer ebenen Stirnfläche 31 auf der dem Ansatz 33 entgegengesetzten Seite. An der der Stirnfläche 31 gegenüberliegenden Seite ist außerdem auf der einen Kreisflächenhälfte ein als Keilbereich 30 ausgebildete schräge Ringfläche vorgesehen. An der dem Keilbereich 30 gegenüberliegenden Seite ist eine um etwa 45° zur Stirnfläche 31 geneigte Fläche 32 für die Anlage eines Gewindestifts 4 vorgesehen.

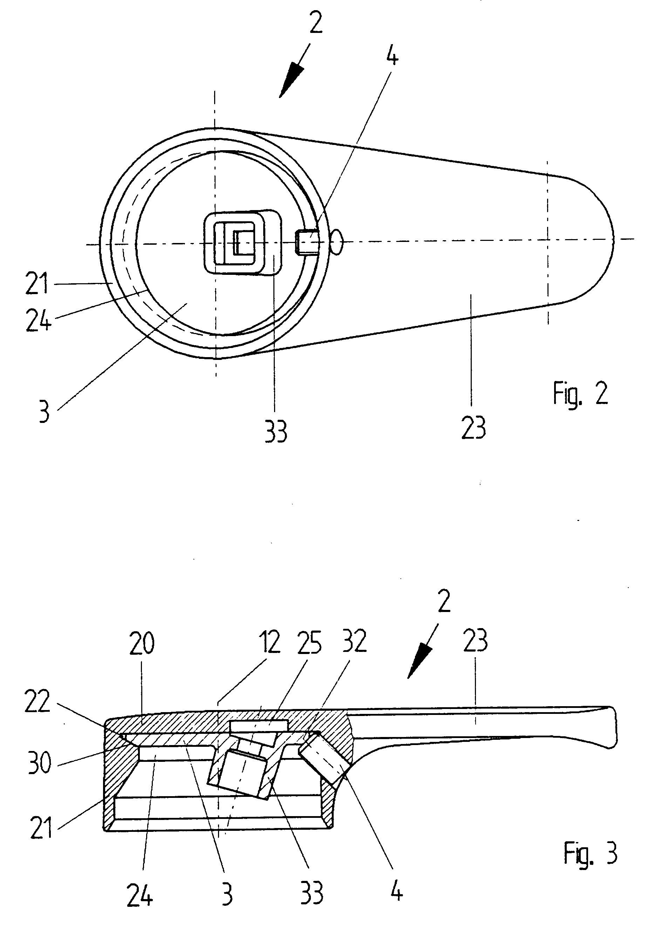

Der Betätigungsgriff 2 wird von einer Haube 20 mit einem Mantelteil 21 und einem radial vorstehenden Griff 23 gebildet. In der Haube 20 ist exzentrisch zur Mittelachse 12 eine Bohrung 24 ausgebildet, wie es insbesondere aus Figur 2 zu entnehmen ist. Hinter der exzentrischen Bohrung 24 ist etwa konzentrisch zur Mittelachse 12 eine entsprechende keilförmige Aufnahme 22 für das Flanschelement 3 über einen Bogenbereich von etwa 180° ausgebildet. An der der Aufnahme 22 gegenüberliegenden Seite ist in der Wandung des Mantelteils 21 unterhalb des Griffs 23 eine um 45° zur Mittelachse 12 geneigte Gewindebohrung zur Aufnahme des Gewindestifts 4 vorgesehen.

Die Montage des Betätigungsgriffs kann in folgender Weise vorgenommen werden:
Zunächst wird das Flanschelement 3 auf den Stellhebel 11 aufgeschoben und mit der Schraubverbindung 35 gesichert. Nunmehr wird der Betätigungsgriff 2 mit seiner Haube 20 über das Flanschelement 3 geschoben, wobei die Bohrung 24 geringfügig größer als der Außendurchmesser des Flanschelements 3 ausgebildet ist. Sobald das Flanschelement 3 mit der Stirnfläche 31 im Grund der Haube 20 anliegt, kann nunmehr der Betätigungsgriff 2 radial in Richtung des Griffs 23 zum Eingriffmischventil 1 verschoben werden bis der Keilbereich 30 fest von der Aufnahme 22 erfaßt ist. Zur Sicherung der Verkeilung kann hiernach der Gewindestift 4 eingeschraubt werden, so daß von der um 45° geneigten Fläche 32 einerseits das Flanschelement 3 in der Aufnahme 22 fest verkeilt und andererseits das Flanschelement 3 mit der Stirnfläche 31 gegen den Grund der Haube 20 gedrückt ist. Der Betätigungsgriff 2 ist hiernach spielfrei mit dem Stellhebel 11 verbunden. Zur Aufnahme der vorstehenden Schraubverbindung 35 ist außerdem eine Ausnehmung 25 im Grund der Haube 20 vorgesehen. Selbstverständlich kann auch die Schraubverbindung versenkt in dem Flanschelement 3 angeordnet werden, so daß dann die Ausnehmung 25 entfallen kann.
Durch ein Herausschrauben des Gewindestiftes 4 kann der Betätigungsgriff 2, z.B. durch ein Anheben des Griffs 23, von dem Flanschelement 3 gelöst werden, so daß ein Austausch oder Wechsel z.B. von verschiedenfarbigen Betätigungsgriffen problemlos möglich ist. Wenigstens der Betätigungsgriff 2 kann hierbei vorzugsweise aus Metall hergestellt sein.

## Patentansprüche

1. Eingriffmischventil mit einem als Kopfteil ausgebildeten Betätigungsgriff (2), wobei das Kopfteil von einem aus dem Ventilgehäuse vorstehenden Stellhebel (11) aufgenommen und an ihm befestigt ist, dadurch gekennzeichnet, daß an dem Stellhebel (11) zunächst ein Flanschelement (3) befestigt ist, über das ein als Haube (20) ausgebildeter Teil des Betätigungsgriffs (2) aufgesteckt ist, wobei an dem Flanschelement (3) ein Keilbereich (30) vorgesehen ist, auf den der Betätigungsgriff (2) mit einer entsprechend ausgebildeten keilförmigen Aufnahme (22) an der inneren Mantelfläche der Haube (20) durch Radialverschiebung zur Herstellung einer form- und kraftschlüssigen Verbindung gelangt.

2. Eingriffmischventil nach Anspruch 1, dadurch gekennzeichnet, daß in einem Mantelteil (21) der Haube (20) wenigstens ein Gewindestift (4) vorgesehen ist, mit dem das Flanschelement (3) in die keilförmige Aufnahme (22) spannbar ist.

3. Eingriffmischventil nach Anspruch 2, dadurch gekennzeichnet, daß die keilförmige Aufnahme (22) sich über einen Kreisbogen von etwa 90 bis 180° in der Haube (20) erstreckt und der Gewindestift (4) auf der gegenüberliegenden Seite der Haube (20) vorgesehen ist.

4. Eingriffmischventil nach Anspruch 2, dadurch gekennzeichnet, daß das Flanschelement (3) mit einer Stirnfläche (31) im Grund der Haube (20) anliegt und ein Keilbereich (30) an der gegenüberliegenden Stirnseite ausgebildet ist, wobei der Gewindestift (4) an der der keilförmigen Aufnahme (22) gegenüberliegenden Seite der Haube (20) um etwa 45° zur Mittelachse (12) der Haube (20) geneigt angeordnet ist und an einer entsprechend geneigt ausgebildeten Fläche (32) des Flanschelements (3) anliegt.

5. Eingriffmischventil nach Anspruch 4, dadurch gekennzeichnet, daß die keilförmige Aufnahme (22) hinter einer exzentrisch zur Mittelachse (12) angeordneten Bohrung (24) in der Haube (20) ausgebildet ist und das Flanschelement (3) einen geringfügig kleineren Außendurchmesser aufweist, so daß die Haube (20) über die Bohrung (24) auf das Flanschelement (3) aufsetzbar ist und das Flanschelement (3) in der verkeilten Position sich etwa konzentrisch zur Mittelachse (12) befindet.

6. Eingriffmischventil nach einem der Ansprüche 1 bis 5, dadurch gekennzeichnet, daß wenigstens der Betätigungsgriff (2) aus Metall hergestellt ist.

7. Eingriffmischventil nach einem der Ansprüche 2 bis 6, dadurch gekennzeichnet, daß der Gewindestift (4) in dem Mantelteil (21) unterhalb eines hebelförmigen Griffs (23) angeordnet ist.

## Claims

1. Single handle mixer tap with an operating handle in the form of a headpiece (2), wherein the headpiece is received by and fastened to an adjusting lever (11) projecting from the valve housing, characterised in that a flange element (3) is firstly attached to the adjusting lever (11), over which flange element is mounted part of the operating handle (2) in the form of a cap (20), wherein on the flange element (3) there is provided a wedge-shaped region (30), on which the operating handle (2) forms a positive and non-positive connection with a correspondingly wedge-shaped seat (22) on the inner surface of the cap (20) by radial displacement.

2. Single handle mixer tap according to claim 1, characterised in that at least one threaded bolt (4), with which the flange element (3) can be clamped into the wedge-shaped seat (22), is provided in an outer wall part (21) of the cap (20).

3. Single handle mixer tap according to claim 2, characterised in that the wedge-shaped seat (22) extends over an arc of about 90 to 180° in the cap (20) and that the threaded bolt (4) is provided on the opposite side of the cap (20).

4. Single handle mixer tap according to claim 2, characterised in that the flange element (3) bears with a face side (31) against the base of the cap (20), and a wedge-shaped region (30) is formed on the opposite side, the threaded bolt (4) being arranged, inclined at about 45° to the central axis (12) of the cap (20), on the side of the cap (20) opposite to the wedge-shaped seat (22), and bearing against a correspondingly inclined face (32) of the flange element (3).

5. Single handle mixer tap according to claim 4, characterised in that the wedge-shaped seat (22) is formed behind a bore (24) in the cap (20), the bore being arranged eccentrically with respect to the central axis (12), and that the flange element (3) has a marginally smaller outer diameter, so that the cap (20) can be positioned on the flange element (3) by way of the bore (24) and the flange element (3), in the wedged position, is approximately concentric with the central axis (12).

6. Single handle mixer tap according to any of claims 1 to 5, characterised in that at least the operating handle (2) is made of metal.

7. Single handle mixer tap according to any of claims 2 to 6, characterised in that the threaded bolt (4) is arranged in the outer wall part (21) beneath a lever-shaped handle (23).

## Revendications

1. Robinet mitigeur monocommande comportant une manette de commande (2) en forme de pièce de tête, cette pièce étant montée sur un levier de réglage (11) en saillie du corps du robinet en étant fixée à ce levier, caractérisé en ce qu'un élément de bride (3) est tout d'abord fixé au levier de réglage (11), et une partie de la manette de commande (2) en forme de chapeau est engagée sur cet élément de bride (3) muni d'une zone en forme de coin (30), zone sur laquelle la manette de commande (2) vient s'engager par une cavité (22) correspondante en forme de coin, sur la surface enveloppe intérieure du chapeau (20), par coulissement radial pour réaliser une liaison par la forme et par la force.

2. Robinet mitigeur monocommande selon la revendication 1, caractérisé en ce que dans une partie enveloppe (21) du chapeau (20), est prévue au moins une tige filetée (4) par laquelle on serre l'élément de bride (3) dans le logement (22) en forme de coin.

3. Robinet mitigeur monocommande selon la revendication 2, caractérisé en ce que le logement (22) en forme de coin occupe un arc de cercle compris entre environ 90 et 180° dans le chapeau (20) et la tige filetée (4) se situe sur le côté opposé du chapeau (20).

4. Robinet mitigeur monocommande selon la revendication 2, caractérisé en ce que l'élément de bride (3) s'applique par une face frontale (3) contre le fond du chapeau (20) et sur la face frontale opposée il y a une zone (30) en forme de coin, la tige filetée (4) prévue sur le côté du chapeau (20) en regard du logement (22) en forme de coin, étant inclinée environ de 45° par rapport à l'axe (12) du chapeau (20), et venant s'appuyer contre une surface (32) inclinée de manière correspondante et appartenant à l'élément de bride (3).

5. Robinet mitigeur monocommande selon la revendication 4, caractérisé en ce que le logement (22) en forme de coin est réalisé derrière un perçage (24) réalisé de manière excentrée par rapport à l'axe (12) dans le chapeau (20) et l'élément de bride (3) présente un diamètre extérieur légèrement plus faible de sorte que le chapeau (20) puisse s'engager avec son perçage (24) sur l'élément de bride (3) qui, en position accrochée, est sensiblement concentrique à l'axe médian (12).

6. Robinet mitigeur monocommande selon l'une des revendications 1 à 5, caractérisé en ce qu'au moins la manette de commande (2) est en métal.

7. Robinet mitigeur monocommande selon l'une des revendications 2 à 6, caractérisé en ce que la tige filetée (4) est réalisée dans la partie enveloppe (21) sous la poignée (23) en forme de levier.
